# EUROPEAN PATENT SPECIFICATION

(11) **EP 2 032 005 B1**
(45) Date of publication and mention of the grant of the patent: **27.10.2010**
(21) Application number: 07726132.9
(22) Date of filing: 22.06.2007
(51) Int. Cl.: A47J 37/07, F24C 15/16

(54) **RACK ASSEMBLY**
GESTELLANORDNUNG
ASSEMBLAGE D'ÉTAGÈRE

(30) Priority: 22.06.2006 GB 0612376
(43) Date of publication of application: 11.03.2009
(73) Proprietor: Panasonic Manufacturing UK, Ltd., Cardiff CF23 7XB (GB)
(72) Inventor: SIGLER, Heinz, Cardiff CF23 7XB (GB)
(74) Representative: Reynolds, Julian David
(86) International application number: PCT/EP2007/005544
(87) International publication number: WO 2007/147627

(56) References cited:
- DE-U1- 29 504 193
- DE-U1-202004 005 475
- GB-A- 2 330 053
- US-A- 4 109 567
- US-A- 5 447 146

## Description

The present invention relates to domestic equipment, and more particularly to a rack assembly for domestic cooking appliances.

This invention concerns a rack assembly usable in domestic cooking appliances which devices may include one or more of the following cooking techniques: convention, microwave, steam, grill, and so forth, or any combination thereof. The invention is, for example, particularly beneficial in relation to microwave ovens. However, the invention is applicable to a wide range of cooking appliances, whether freestanding or adapted for built-in installation, i.e. installed within a framework or outer housing, or are mounted with kitchen or other household furniture (sometimes known as "slot-in" or "built-in" appliances).

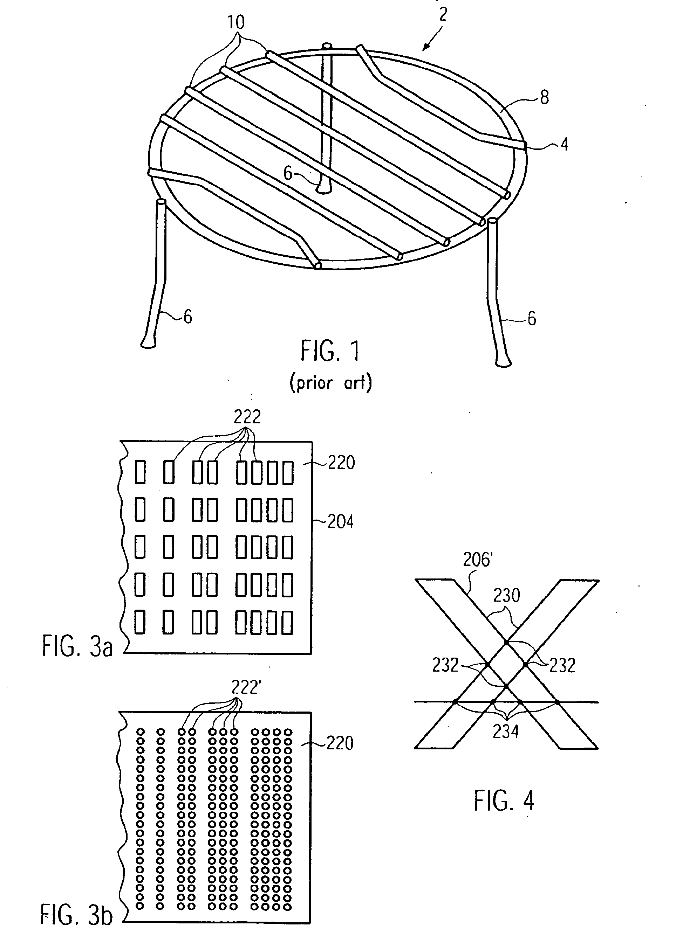

It is conventional for microwave ovens, and other electrical domestic appliances, to include some sort of free standing rack assembly, typically to be mounted on top of a rotating platform within the oven, and used to support food, or a plate or other food container, during cooking. The rack assembly can be significant, for example, when a grill function is used, as it positions the food closer the grill element and can make heating and/or browning more effective. A known rack assembly is discussed later in relation to Fig. 1.

A problem with a conventional rack assembly is that it is of relatively simple construction, it has only a single standing position or orientation, and so the available options are simply to use the oven with the rack assembly or without.

A further problem is that the flat perforated part of the rack assembly is also of simple construction, with regularly, perhaps widely spaced bars, meaning that small pieces of food are not stably supported during cooking and may fall through the spacings.

The present invention provides a rack assembly for a domestic appliance, according to claim 1 of the appended claims.

Preferably, said at least two supports each comprise at least one leg and at least one foot, the legs being attached to the rack; wherein the legs are elongate and the rack is attached to each of the legs at a point thereon that is closer to one end thereof than the other. Preferably, for each of the supports, the rack is attached at a point thereon that is about 10 to about 40% along the length thereof

The rack comprises a frame having a plurality of cross bars attached thereto and extending parallel to each other, the spacings between the crossbars forming said apertures. Suitably, the spacing between adjacent crossbars may be between about 10 mm to about 25 mm

The spacing between adjacent crossbars is smatter at the midpoint of the rack than at the edges of the rack. The spacing between adjacent crossbars may be, for example, between about 10 mm to about 15 mm at the midpoint of the rack and between about 20 mm to about 25 mm at the edges of the rack.

In another embodiment the spacing between adjacent crossbars varies gradually from said midpoint to said ends.

In one embodiment, the rack has at least four sides, e.g. is square or rectangular, a support being attached to at least two of the sides. Preferably, each support comprises a pair of legs and a pair of feet. The rack may be generally rectangular and have two short sides to which the supports are US-A-5,447,146 discloses an oven rack assembly to support cooking vessels within an oven that is capable of being pulled outwardly and upwardly exterior to the oven's interior heating chamber. The rack assembly includes a first rack which, when pulled and removed from the interior of the oven, can be raised to any one of several heights, including a height approximately equal to that of the upper exterior surface of the oven, while maintaining a horizontal orientation at all times. The assembly has a second rack for mounting on the first rack and which has free ends locatable in holes in the first rack. The second rack has an upper, integrally formed shelf, closer to one end of the support legs of the second rack than the other. A lower shelf may be mounted on the second rack via hooks. attached. Preferably, the cross bars extend between the two long sides of the rectangular rack.

In another embodiment, the rack is generally circular and comprises at least three supports.

The supports may comprise rod-like members and the feet may comprise resilient members, one resilient member being attached to each end of the rod-like member.

Suitably, the appliance is a microwave oven, or an oven incorporating any combination of convention, microwave, steam or grill, or any other suitable cooking technique.

An advantage of the invention is that the rack assembly can be placed either in an orientation in which the rack is relatively high (useful for cooking bacon, sausages, burgers, toast, etc.) and an orientation in which the rack is relatively low (useful for cooking a whole or half chicken, or a joint of meat, etc.). Thus two levels of cooking are provided by one assessory.

The invention is particularly beneficial as an accessory for microwave ovens and smaller cooking appliances that include a grill function.

A further advantage is that the supports not only provide rigidity and support to the accessory but also feature as handles. This allows for easier and safer handling of the accessory when inserting and removing from the cooking appliance.

The invention advantageously, through the use of different sized apertures, or different or variable spacings between crossbars, enables food of various types and sizes to be supported.

Embodiments of the invention will now be described in detail, by way of example, with reference to the accompanying drawings, in which:
Figure 1 (PRIOR ART) shows a known rack assembly for a microwave oven;
Figure 2 illustrates a rack assembly in accordance with an embodiment of the present invention (a) in a "high-rack" orientation and (b) in a "low-rack" orientation;
Figure 3 depicts alternative embodiments of the rack for the rack assembly of

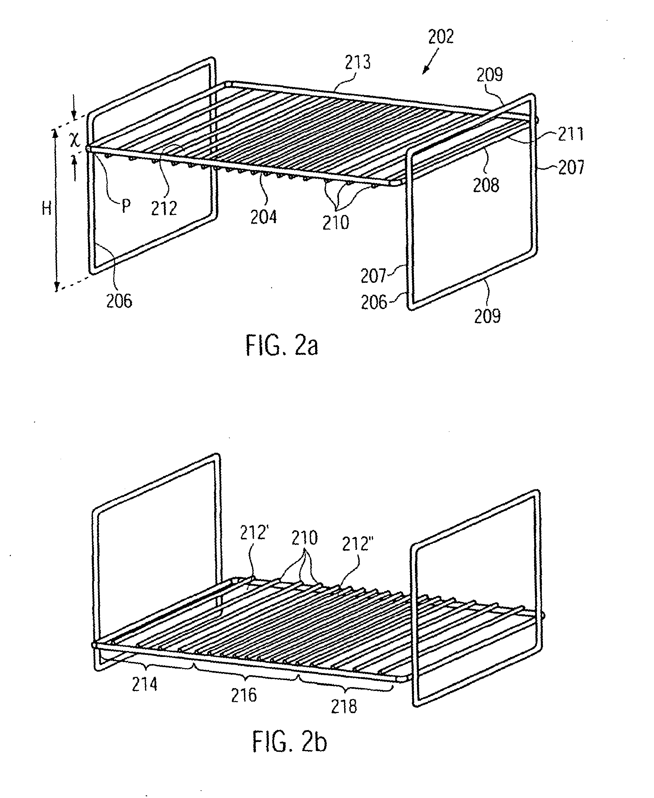

Fig. 2, (a) using punched rectangles, and (b) using punched holes; and
Figure 4 is an end view of an alternative form of supports in another embodiments of the invention;

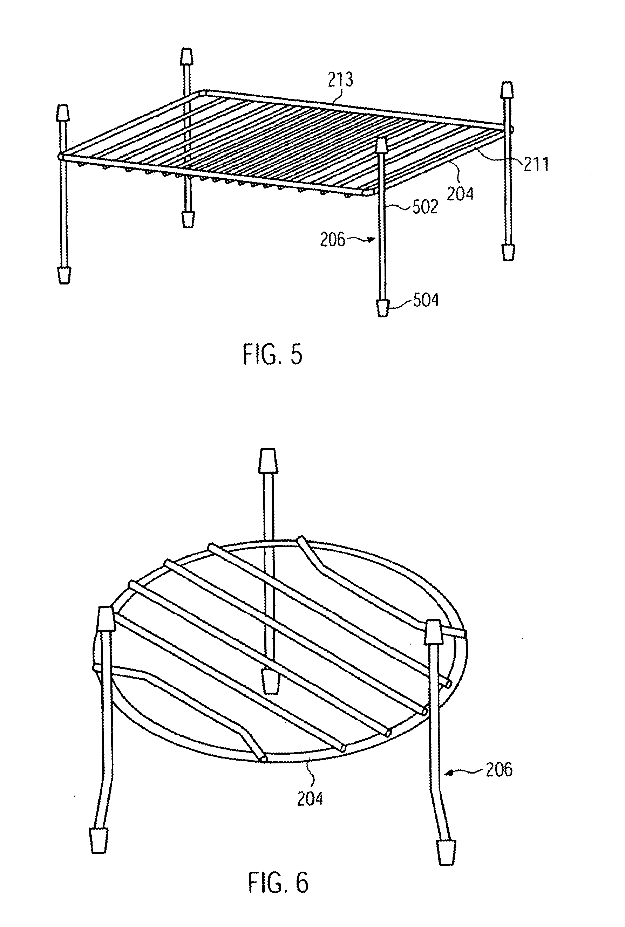

Figure 5 illustrates a further embodiment of the invention, using alternative supports; and
Figure 6 illustrates a further embodiment using a non-rectangular rack.

In the description and drawings, like numerals are used to designate like elements.

Referring to Fig. 1 (PRIOR ART), this shows a known rack assembly, generally designated 2, for a microwave oven. The rack assembly 2 consists of a rack 4 and three supports (legs) 6. The rack 4 comprises a circular frame 8 and a number of regularly spaced crossbars 10. The spacing 12 between the crossbars 10 is uniform and relatively wide; therefore, the rack assembly may support a plate or the like, but may only do so at a single height, and the wide spacings can make inappropriate for cooking smaller portions of foods, for example sausages.

Figure 2 illustrates a rack assembly, generally designated 202, in accordance with an embodiment of the present invention. Figure 2(a) shows the rack assembly 202 in a "high-rack" orientation, suitable for cooking bacon, sausages, burgers, toast, etc. The rack assembly 202 consists of a rack 204 and two supports 206, each support comprising two legs 207 and two "feet" 209. The rack 204 comprises a rectangular frame 208 and a number of spaced crossbars 210. (Alternatively, the frame 208 is square.) The rack assembly 202 is suitably made of thick metal wire (e.g. chrome plated steel), of thickness about 3-4 mm, or more if greater strength is required. The crossbars 210 are suitably attached to the frame 208, and the frame 208 attached to the supports 206, by welding or other suitable fixation technique.

Although shown attached to the short sides 211 of the frame 208, in an alternative embodiment the supports 206 may be attached to the long sides 213 of the frame 208.

The supports 206 are generally square (but may be rectangular), and the point P at which the frame 208 is attached to the supports 206 is at a distance x from the top of the support 206, which has a height H. According to the invention, the rack 208 is not located at the top, or half way up height H, but, in the illustrated example, (x/H) x100 is approximately 25%. However, (x/H) x100 may be approx. 10-40%.

This asymmetric design means that when the rack assembly 202 is inverted, into a second possible orientation (Fig. 2(b)), the rack 204 is at a low level (suitable for cooking a whole or half chicken, or a joint of meat, etc.).

Although the spacing 212 between the crossbars 210 may be uniform, in the illustrated embodiment it is non-uniform. Referring again to Fig. 2(b), the rack 204 is divided into three sections, 214, 216 and 218. In the outer sections 214 and 218, the spacings 212' between the crossbars 210 are relatively large (approx 20 to 25 mm), while in the centre section 216, the spacings 212" between the crossbars 210 is relatively small (approx 10 to 15 mm). In an alternative form, the spacing 212 may vary, from a small size at the centre, gradually along the rack 204 to a larger size at the ends. Such configurations mean there is greater support in the middle, for the centre of gravity of a large object such a chicken or joint of meat.

Figure 3 depicts alternative embodiments of the rack 204 for the rack assembly 202 of Fig. 2, (a) using punched rectangles, and (b) using punched holes (only part of the rack 204 is shown). In Fig. 3(a), the rack comprises a flat plate 220 (e.g. steel, aluminium, plated steel or enamelled steel), in which rectangular holes 222 have been punched (using conventional techniques) during the manufacturing process. In Fig. 2(b), the rack 204 has the same form as in Fig. 3(a), except that the punched holes 222' are circular.

Fig. 4 is an end view of an alternative form of supports 206' in another embodiment of the invention. This is the same as the first mentioned embodiment, except that the supports 206' are in the shape of an "X", rather than being square. Each support 206' comprises two sections 230 which are welded at points 232, the rack 204 being welded to the supports 206' at points 234.

Figure 5 illustrates a further embodiment of the invention. This is the same as the embodiment of Fig. 2, except that the supports 206 comprise rod-like members 502, each member 502 having an end-member or foot 504 attached to each end thereof. A pair of members 502 is attached to each of the short sides 211 of the rack 204. The end-members 504 suitably comprise rounded or conically tapering feet, for example made of rubber or silicone rubber. Again, the rod-like members 502 could equally be attached to the long sides 213 of the rack 204.

Figure 6 illustrates a further embodiment. This is the same as the other embodiments, except that the rack 204 is round. The supports 206 are the same as in the embodiment of Fig 5.

## Claims

1. A rack assembly (202) for a domestic appliance, comprising:
a rack (204) having a plurality of apertures distributed over the surface thereof;
at least two supports (206), each of the supports being fixedly attached to the rack (204), each support being adapted for supporting the rack assembly (202) in at least a first orientation and a second orientation within the domestic appliance, the second orientation being different to the first orientation;
wherein the rack (204) is attached to the supports (206) in an asymmetric configuration, whereby, in use, the level of the rack (204) is higher when the rack assembly (202) is in the first orientation than in the second orientation,
wherein the rack (204) comprises a frame having a plurality of cross bars (210) attached thereto and extending parallel to each other, the spacings (212, 212', 212") between the crossbars forming said apertures,
**characterised in that** the spacing (212, 212', 212") between adjacent crossbars (210) is smaller at the midpoint (216) of the rack (204) than at the edges (214, 218) of the rack.

2. The rack assembly of claim 1, wherein the second orientation is substantially opposite to the first orientation.

3. The rack assembly of claim 1 or 2, wherein:
said at least two supports (206) each comprise at least one leg (207; 502) and at least one foot (209; 504), the legs being attached to the rack (204);
wherein the legs (207; 502)are elongate, and the rack (204) is attached to each of the legs (207; 502) at a point (P) thereon that is closer to one end thereof than the other.

4. The rack assembly of claim 1, 2 or 3, wherein, for each of the supports (206), the rack is attached at a point (P) thereon that is about 10 to about 40% along the length thereof.

5. The rack assembly of any of the preceding claims, wherein the spacing spacings (212, 212', 212") between adjacent crossbars (210) is between about 10 mm to about 25 mm.

6. The rack assembly of any of the preceding claims, wherein the spacing between adjacent crossbars (210) is between about 10 mm to about 15 mm at the midpoint (216) of the rack and between about 20 mm to about 25 mm at the edges (214, 218) of the rack.

7. The rack assembly of any of the preceding claims, wherein the spacing (212, 212', 212") between adjacent crossbars (210) varies gradually from said midpoint (216) to said ends (214, 218).

8. The rack assembly of any of the preceding claims, wherein the rack (204) has at least four sides (211, 213), e.g. is square or rectangular, a support (206) being attached to at least two of the sides (211).

9. The rack assembly of claim 8, wherein each support (206) comprises a pair of legs (207; 502) and a pair of feet (209; 406).

10. The rack assembly of claim 8 or 9, wherein the rack (204) is generally rectangular and has two short sides (211) to which the supports (206) are attached.

11. The rack assembly of claim 10, wherein the cross bars (210) extend between the two long sides (213) of the rectangular rack (204).

12. The rack assembly of any of claims 1 to 7, wherein the rack (204) is generally circular and comprises at least three supports (206).

13. The rack assembly of claim 2, or any claim dependent thereon, wherein the supports (206) comprise rod-like members (504) and the feet (504) comprise resilient members, one resilient member being attached to each end of the rod-like member (504).

## Patentansprüche

1. Gestellanordnung (202) für ein Haushaltsgerät, umfassend:
ein Gestell (204) mit einer Mehrzahl über die Fläche desselben verteilter Öffnungen;
zumindest zwei Träger (206), wobei jeder der Träger fest am Gestell (204) angebracht ist, wobei jeder Träger angepasst ist, um die Gestellanordnung (202) in zumindest einer ersten Ausrichtung und einer zweiten Ausrichtung innerhalb des Haushaltsgeräts zu tragen, wobei sich die zweite Ausrichtung von der ersten Ausrichtung unterscheidet;
wobei das Gestell (204) an den Trägern (206) in einer asymmetrischen Anordnung angebracht ist, wodurch, bei Verwendung, das Gestell (204), wenn sich die Gestellanordnung (202) in der ersten Ausrichtung befindet, höher liegt, als wenn sie sich in der zweiten Ausrichtung befindet,
wobei das Gestell (204) einen Rahmen mit einer Mehrzahl von Querstäben (210) umfasst, die daran angebracht sind und sich parallel zueinander erstrecken, wobei die Zwischenräume (212, 212', 212") zwischen den Querstäben die Öffnungen bilden,
**dadurch gekennzeichnet, dass** der Zwischenraum (212, 212', 212") zwischen benachbarten Querstäben (210) am Mittelpunkt (216) des Gestells (204) kleiner ist als an den Rändern (214, 218) des Gestells.

2. Gestellanordnung nach Anspruch 1, wobei die zweite Ausrichtung im Wesentlichen entgegengesetzt zur ersten Ausrichtung ist.

3. Gestellanordnung nach Anspruch 1 oder 2, wobei:
die zumindest zwei Träger (206) jeweils zumindest ein Bein (207; 502) und zumindest einen Fuß (209; 504) umfassen, wobei die Beine am Gestell (204) angebracht sind;
wobei die Beine (207; 502) länglich sind, und das Gestell (204) an jedem der Beine (207; 502) an einem Punkt (P) darauf angebracht ist, der dem einen Ende davon näher ist als dem anderen.

4. Gestellanordnung nach Anspruch 1, 2 oder 3, wobei, bei jedem der Träger (206), das Gestell an einem Punkt (P) darauf angebracht ist, der bei etwa 10 bis etwa 40% entlang der Länge davon liegt.

5. Gestellanordnung nach einem der vorstehenden Ansprüche, wobei der Zwischenraum (212, 212', 212") zwischen benachbarten Querstäben (210) zwischen etwa 10 mm bis etwa 25 mm beträgt.

6. Gestellanordnung nach einem der vorstehenden Ansprüche, wobei der Zwischenraum zwischen benachbarten Querstäben (210) zwischen etwa 10 mm bis etwa 15 mm am Mittelpunkt (216) des Gestells und zwischen etwa 20 mm bis etwa 25 mm an den Rändern (214, 218) des Gestells beträgt.

7. Gestellanordnung nach einem der vorstehenden Ansprüche, wobei der Zwischenraum (212, 212', 212") zwischen benachbarten Querstäben (210) vom Mittelpunkt (216) zu den Rändern (214, 218) graduell variiert.

8. Gestellanordnung nach einem der vorstehenden Ansprüche, wobei das Gestell (204) zumindest vier Seiten (211, 213) aufweist, z.B. quadratisch oder rechteckig ist, wobei an zumindest zwei der Seiten (211) ein Träger (206) angebracht ist.

9. Gestellanordnung nach Anspruch 8, wobei jeder Träger (206) ein Paar Beine (207; 502) und ein Paar Füße (209; 406) umfasst.

10. Gestellanordnung nach Anspruch 8 oder 9, wobei das Gestell (204) im Allgemeinen rechteckig ist und zwei kurze Seiten (211) aufweist, an denen die Träger (206) angebracht sind.

11. Gestellanordnung nach Anspruch 10, wobei sich die Querstäbe (210) zwischen den beiden langen Seiten (213) des rechteckigen Gestells (204) erstrecken.

12. Gestellanordnung nach einem der Ansprüche 1 bis 7, wobei das Gestell (204) im Allgemeinen kreisförmig ist und zumindest drei Träger (206) umfasst.

13. Gestellanordnung nach Anspruch 2, oder einem davon abhängigen Anspruch, wobei die Träger (206) stabähnliche Teile (504) umfassen und die Füße (504) elastische Teile umfassen, wobei an jedem Ende des stabähnlichen Teils (504) ein elastisches Teil angebracht ist.

## Revendications

1. Assemblage d'étagères (202) destiné à un appareil électroménager, comprenant :
une étagère (204) présentant une pluralité d'ouvertures réparties sur la surface de celle-ci;
au moins deux supports (206), chacun des supports étant rattaché fixement à l'étagère (204), chaque support étant adapté pour soutenir l'assemblage d'étagères (202) dans au moins une première orientation et une seconde orientation à l'intérieur de l'appareil électroménager, la seconde orientation étant différente de la première orientation ;
l'étagère (204) étant rattachée aux supports (206) dans une configuration asymétrique, moyennant quoi, à l'usage, le niveau de l'étagère (204) est plus élevé lorsque l'assemblage d'étagères (202) se trouve dans la première orientation que lorsqu'il se trouve dans la seconde orientation,
l'étagère (204) comprenant un cadre présentant une pluralité de barres transversales (210) rattachées à celui-ci et se prolongeant parallèlement les unes aux autres, les écartements (212, 212', 212") entre les barres transversales constituant lesdites ouvertures,
**caractérisé en ce que** l'écartement (212, 212', 212") existant entre des barres transversales (210) adjacentes est plus petit au centre (216) de l'étagère (204) qu'aux extrémités (214, 218) de l'étagère.

2. Assemblage d'étagères selon la revendication 1, dans lequel la seconde orientation est sensiblement opposée à la première orientation.

3. Assemblage d'étagères selon la revendication 1 ou 2, dans lequel :
lesdits au moins deux supports (206) comprennent chacun au moins une patte (207 ; 502) et au moins un pied (209 ; 504), les pattes étant rattachées à l'étagère (204) ;
les pattes (207 ; 502) étant de forme allongée, et l'étagère (204) étant rattachée à chacune des pattes (207 ; 502) en un point (P) situé plus près d'une de leurs extrémités que de l'autre,

4. Assemblage d'étagères selon la revendication 1, 2 ou 3, dans lequel, pour chacun des supports (206), l'étagère est rattachée en un point (P) situé à environ 10 et jusqu'à environ 40 % de la longueur de celui-ci.

5. Assemblage d'étagères selon l'une quelconque des revendications précédentes, dans lequel l'écartement (212,212', 212") existant entre des barres transversales (210) adjacentes est compris entre environ 10 mm et environ 25 mm.

6. Assemblage d'étagères selon l'une quelconque des revendications précédentes, dans lequel l'écartement entre des barres transversales (210) adjacentes est compris entre environ 10 mm et environ 15 mm au centre (216) de l'étagère et entre environ 20 mm et environ 25 mm aux extrémités (214, 218) de l'étagère.

7. Assemblage d'étagères selon l'une quelconque des revendications précédentes, dans lequel l'écartement (212, 212', 212") entre des barres transversales (210) adjacentes varie progressivement dudit centre (216) vers lesdites extrémités (214, 218).

8. Assemblage d'étagères selon l'une quelconque des revendications précédentes, dans lequel l'étagère (204) présente au moins quatre côtés (211, 213), en étant par exemple carrée ou rectangulaire, un support (206) étant rattaché à au moins deux des côtés (211).

9. Assemblage d'étagères selon la revendication 8, dans lequel chaque support (206) comprend une paire de pattes (207 ; 502) et une paire de pieds (209 ; 406).

10. Assemblage d'étagères selon la revendication 8 ou 9, dans lequel l'étagère (204) est de forme générale rectangulaire et présente deux côtés courts (211) auxquels sont rattachés les supports (206).

11. Assemblage d'étagères selon la revendication 10, dans lequel les barres transversales (210) se prolongent entre les deux côtés longs (213) de l'étagère (204) rectangulaire.

12. Assemblage d'étagères selon l'une quelconque des revendications 1 à 7, dans lequel l'étagère (204) est de forme générale circulaire et comprend au moins trois supports (206).

13. Assemblage d'étagères selon la revendication 2, ou l'une quelconque des revendications dépendantes de celle-ci, dans lequel les supports (206) comprennent des éléments en forme de tige (502) et les pieds (504) comprennent des éléments élastiques, un élément élastique étant rattaché à chaque extrémité de l'élément en forme de tige (502).
